# EUROPEAN PATENT SPECIFICATION

(11) **EP 1 754 803 B1**
(45) Date of publication and mention of the grant of the patent: **22.05.2019**
(21) Application number: 05743718.8
(22) Date of filing: 30.05.2005
(51) Int. Cl.: B08B 3/04, B65G 49/04, C23G 3/00

(54) **ROTATING MODULE AND WORK TRANSPORTING APPARATUS**
ROTIERENDES MODUL UND ARBEITSTRANSPORTVORRICHTUNG
MODULE ROTATIF ET APPAREIL DE TRANSPORT D"OUVRAGES

(30) Priority: 31.05.2004 JP 2004160688
(43) Date of publication of application: 21.02.2007
(73) Proprietor: HIRAIDE PRECISION CO., LTD., Nagano 3940001 (JP)
(72) Inventor: HIRAIDE, Masahiko, HIRAIDE PRECISION CO., LTD., Nagano 3940001 (JP); FUJIMORI, Kazutaka, HIRAIDE PRECISION CO., LTD., Nagano 3940001 (JP)
(74) Representative: Schmitt-Nilson Schraud Waibel Wohlfrom Patentanwälte Partnerschaft mbB
(86) International application number: PCT/JP2005/009892
(87) International publication number: WO 2005/116297

(56) References cited:
- JP-A- 5 154 272
- JP-A- 55 149 671
- JP-U- 6 081 678
- US-A- 2 337 137
- US-A- 3 502 200

## Description

### Technical Field

The present invention relates to a rotating module suitable for use in performing a prescribed process while conveying a metal product, a plastic molding, a product made of a ceramic or other inorganic substance, or other workpiece placed inside a rotating drum. The present invention also relates to a workpiece cleaning device or other workpiece conveyance/treatment device constructed using the rotating module of the present invention.

### Background Art

Oil used during machining sometimes adheres to a workpiece that is subjected to pressing, sheet metal working, cutting, or other metal machining. A type of device is known that uses a rotating drum to clean the adhered oil from the workpiece. In a rotating-drum-type cleaning device, a workpiece to be cleaned is placed inside a cylindrical rotating drum, and the workpiece is cleaned while the rotating drum used for cleaning is rotated in a state of immersion in a cleaning solution. The workpiece is usually subjected to draining and drying steps after going through this cleaning step.

A known rotating-drum-type cleaning device capable of sequentially and continuously conveying a workpiece to the cleaning step, the draining step, and the drying step has a structure in which a rotating drum for the cleaning step, a rotating drum for the draining step, and a rotating drum for the drying step are connected in the axial direction thereof, and a feeding fin is disposed in a helical configuration on the internal peripheral surfaces of the rotating drums. For example, a configuration is adopted whereby the assembly of rotating drums is tilted so that the rotating drum for cleaning is positioned at the bottom, and the workpiece emerges from the surface of the cleaning solution while being conveyed within the rotating drum, and is fed into the rotating drum for the subsequent draining step.

US 2,337,137 discloses an apparatus for the treatment of solid materials with liquids. The apparatus comprises a rotating cylindrical vessel containing a number of plates or partitions dividing said vessel into a plurality of compartments. The partitions are provided with openings and the compartments are provided with suitable means for passing the solid material from one compartment to another and so on through the cylindrical vessel. The apparatus is also provided with means for feeding the material thereto at one end of the same and means for discharging the material at the other end of the same together with means for introducing a countercurrent of liquid at the discharge end of said cylindrical vessel. The rotation of the cylindrical vessel causes the means in the compartments to function to pass the solid material from one compartment to another and also to pass the liquid from one compartment to another but in the opposite direction.

US 3 502 200 A discloses an apparatus for transporting small articles down into and up out of a fluid treatment medium, comprising a pair of spiral channels with partly foraminate walls, winding in opposite senses, intercommunicating at their outer ends and rotatable as an integral whole about a substantially horizontal axis, preferably with horizontally transporting feed and discharge channels in the form of Archimedean screws connected to the inner ends respectively of the two spirals. Pairs of spirals, each pair partly immersed in a separate vessel containing a treatment medium and linked to their neighbours along a common axis by lengths of similarly connected Archimedean screws, are employed for a sequence of treatments, for instance for treatments in degreasing solvent liquor/vapour for critical cleaning of bearing balls and rollers with reduced risk of shock and abrasion.

An ultrasonic automatic washer comprising a rotating vessel with a plurality of compartments is disclosed in JP-S 55149671 A

However, in the conventional rotating-drum-type cleaning device, the rotating drum for cleaning also discharges the cleaning solution at the same time as the workpiece is conveyed by the helical feeding fin formed on the internal peripheral surface of the drum. Therefore, in order to prevent the cleaning solution from being fed towards the rotating drum for the subsequent draining step, it is necessary to taper the distal end portion in the feeding direction of the rotating drum or otherwise provide a fluid trap, and connect to the end thereof a small-diameter rotating drum for fluid draining. When the rotating drum is tapered at a sharp angle, depending on the shape of the workpiece, it is difficult for the workpiece to cross over the tapered surface and be discharged into the subsequent step. The tapering angle should therefore be as small as possible to ensure that the workpiece is conveyed smoothly.

According to the prior art, it is necessary to form a tapered portion at the distal end of the rotating drum in order to form a fluid trap, and the tapered portion is preferably tapered at a small angle. Since a long tapered portion must therefore be disposed in the axial direction, the entire length of the drum is increased, and it may be impossible to install the drum in a plant or the like with a limited amount of installation space.

In the conventional rotating-drum-type cleaning device, the workpiece is subsequently subjected to cleaning and other treatment while being conveyed by the helical feeding fin attached to the internal peripheral surface of the drum. The residence time of the workpiece inside the rotating drum is therefore increased, and work efficiency is adversely affected. Since there are also numerous workpieces inside the drum, the strength of the drum must be increased by increasing the wall thickness or installing reinforcing materials so that the drum can withstand the weight of the workpieces in the drum. This results in such drawbacks as increased manufacturing cost of the rotating drum, and the need to increase the capacity of the rotational drive mechanism to compensate for the increased weight of the drum.

### Disclosure of the Invention

An object of the present invention is to provide a rotating module that is provided with a novel work conveyance mechanism in order to overcome the foregoing drawbacks.

Another object of the present invention is to provide a work conveyance/processing device that is suitable for performing cleaning and the like of a workpiece using the aforementioned novel rotating module.

Aimed at attaining the stated objects, there is provided in accordance with the present invention a rotating module in accordance with claim 1,
that is used for conveyance and processing of a workpiece and allows a workpiece that is introduced from an input port to be transported out along an internal conveyance path and discharged from a discharge port by rotational operation in a prescribed direction about a central axis; wherein the rotating module is characterized in that
the conveyance path comprises
a spiral passage for discharging a workpiece from the external periphery towards the center along a spiral path that is centered about the central axis, or from the center towards the external periphery;
and an axial passage for discharging the workpiece in a direction of the central axis by using a helical feeding fin that extends in a direction of the central axis, wherein
an external peripheral end in a radial direction in the spiral passage is connected to one port selected from the input port and the discharge port, and an end disposed toward a center in a radial direction in the spiral passage is connected to the other port selected from the input port and the discharge port via the axial passage.

Specifically, the spiral passage functions as a spiral passage for carrying in a workpiece from the external periphery towards the center, and as a spiral passage for carrying out the workpiece from the center towards the external periphery, according to the direction of the spiral and the direction of rotation. In the former case, the end on the external peripheral side in the radial direction in the spiral passage is connected to the input port, and the end disposed towards the center in the radial direction in the spiral passage is connected to the discharge port via the axial passage. In the latter case, the end on the external peripheral side in the radial direction in the spiral passage is connected to the discharge port, and the end disposed towards the center in the radial direction in the spiral passage is connected to the input port via the axial passage.

A plurality of spiral passages may be formed herein, and a plurality of corresponding input ports or discharge ports may be provided. In this case, a plurality of spiral passages may be formed so as to be offset in a peripheral direction at prescribed angular intervals about the central axis, and an input port or discharge port may be formed in a position that corresponds to an end on an external peripheral side of each spiral passage. Also in this case, a plurality of feeding fins of the axial passage may be arranged so as to be offset at a prescribed angular interval in the circumferential direction about the central axis, whereby a workpiece carried out from each spiral passage is carried out to the discharge port by the corresponding feeding fin, or a workpiece introduced from the input port is carried into each spiral passage by the feeding fins.

A passage surface of the spiral passage may have a curved surface that follows an involute curve or the like. In accordance with the invention, a plurality of arcuate surfaces that have different curvatures is smoothly linked together to form a spiral passage surface. A plurality of flat surfaces may also be linked together at a prescribed angle to form the spiral passage surface.

Furthermore, the rotating module is preferably provided with a driven gear, a driven pulley, a ratchet, a frictional drive member, and other rotational input members for transmitting rotational force in order to rotate the rotating module about the central axis thereof.

In a case in which a plurality of rotating modules are connected in the axial direction, and a workpiece is conveyed through each rotating module in sequence, an intake port is preferably provided for carrying the workpiece into the axial passage. In this case, by connecting one end of the axial passage to the discharge port and the other end of the axial passage to the intake port, a workpiece carried into the axial passage from the intake port can be carried into the spiral passage by a feeding fin.

In this case, to make it possible to connect rotating modules to each other by a simple means, the rotating module preferably has a connecting unit for coaxially connecting the intake port of a rotating module to the discharge port of another rotating module, and/or a connecting unit for connecting the discharge port of a rotating module to the intake port of another rotating module. In such cases as when a workpiece is conveyed from one treatment device to another treatment device, increasing the number of connected rotating modules makes it possible to construct a simple workpiece conveyance mechanism that is adapted to the distance of conveyance between devices.

The input port may be made sealable by attaching a lid when the rotating module of the present invention is used in a draining or drying process for the centrifugal separation of a cleaning solution or the like adhered to a workpiece. For example, the input port may be blocked using a lid formed from a punching metal or other fluid-permeable material. When the rotating module is rotated in the opposite direction about the central axis, the workpiece inside the spiral passage is carried out towards the input port and pushed against the lid. The workpiece can be drained or dried by rotating the rotating module at high speed in this state. In order to carry the workpiece into the spiral passage, the workpiece may be introduced from the intake port or the discharge port while rotating the rotating module in the positive direction.

In such cases as when the rotating module of the present invention is used for workpiece cleaning, the member that forms at least the passage surface of the spiral passage may be formed from a punching metal or another fluid-permeable material. In this case, when the rotating module is, for example, kept horizontal in a state in which the lower portion thereof is immersed in a cleaning solution, and the rotating module is rotated in this state, a workpiece introduced from the input port or the intake port is drawn upward towards the center while sliding or rolling on the surface of the spiral passage. Specifically, the workpiece is drawn upward from the surface of the cleaning solution. The workpiece thus drawn up after being cleaned in the cleaning solution enters the axial passage, and is discharged from the discharge port by a feeding fin. By positioning the axial passage above the surface of the cleaning solution, the cleaning solution can be reliably prevented from flowing from the discharge port or the intake port into a subsequent step or a previous step. Unlike a conventional rotating-drum-type cleaning device in which a helical feeding fin is formed on the internal peripheral surface, the length of the device can be reduced in the axial direction since there is no need to provide a tapered fluid trap mechanism at the distal end of the drum.

Cleaning is also performed inside the spiral passage, and the axial length can therefore be shorter in comparison to a case in which cleaning is performed in a helical groove that extends in the axial direction and is formed between feeding fins extending in the axial direction. The cleaning device can thus be small-sized and compact.

Furthermore, the residence time of a workpiece and the number of resident workpieces can be reduced in comparison to a case in which cleaning is performed while a workpiece is conveyed between helical feeding fins. The processing time can thus be shortened, and since there is also no need for a high-strength structure capable of retaining a large number of workpieces, the manufacturing cost can be reduced.

In the rotating module of the present invention, a partition panel is attached in a spiral about the central axis and between front and rear end panels that are disposed at both ends in the direction of the central axis. In this case, the axial passage is formed by a center-side internal peripheral surface portion in an internal peripheral surface of the partition panel, and a feeding fin which has a prescribed height is arranged along the center-side internal peripheral surface portion. The discharge port is formed in the position of the front end panel on which the front end of the center-side internal peripheral surface portion is positioned.

The internal peripheral surface of the partition panel comprises, in order from an external peripheral side, an arcuate large-diameter internal peripheral surface portion that spans a prescribed angle, a spiral internal peripheral surface portion that is connected to one end in a circumferential direction of the arcuate internal peripheral surface portion, and an arcuate small-diameter internal peripheral surface portion that spans a prescribed angle and is connected to an end on a central side of the spiral internal peripheral surface portion. The small-diameter internal peripheral surface portion is the center-side internal peripheral surface portion, and the discharge port is a circular opening whose inner dimensions correspond to the small-diameter internal peripheral surface portion.

The present invention furthermore relates to a workpiece conveyance/processing device that comprises the rotating modules configured as described above, and a rotational drive mechanism for rotating the rotating module about the central axis.

When this workpiece conveyance/processing device is used as a workpiece cleaning device, the structure described above may be furthermore provided with a treatment fluid storage tank in which a cleaning solution or other treatment fluid is stored, wherein the rotating module is retained in a state in which a lower side portion thereof is immersed in the treatment fluid while the central axis is horizontally aligned, and a member that defines a surface of the spiral passage in the rotating module is formed from a punching metal or other fluid-permeable material.

A plurality of rotating modules may be connected in the axial direction herein to form a workpiece conveyance/processing device. In this case, a rotational drive mechanism may be provided for simultaneously or selectively driving the rotating modules in rotation about their respective central axes.

For example, a workpiece cleaning and drying system can be constructed with a rotating module as a workpiece cleaning station at the front stage side in the conveyance direction, a rotating module in a subsequent stage as a workpiece de-watering station, a rotating module in the next stage as a workpiece rinsing station, and a rotating module in a final stage as a workpiece drying station.

In the rotating module used for conveyance and processing of a workpiece according to the present invention, a workpiece introduced from the input port is carried in towards the center along the spiral passage when the module is rotated in a prescribed direction (positive direction) about the central axis. The workpiece is then carried out from the discharge port by the helical feeding fin. When the module is rotated in a negative second direction about the central axis, a workpiece introduced from the discharge port is carried in towards the center of the spiral passage along the axial passage by the feeding fin, and the workpiece is then carried out to towards the external peripheral side along the spiral passage and discharged from the input port.

Since the spiral passage is formed in the direction perpendicular to the central axis in this manner, it is possible to construct a compact workpiece conveyance/processing device that has a short dimension in the axial direction compared to a case in which a workpiece is cleaned or otherwise processed while being conveyed along a helical groove between feeding fins that are helically arranged on the internal peripheral surface of a rotating drum.

In such cases as when rotating modules are connected, a state can be created in which the spiral passages of the rotating modules are completely partitioned from each other. This makes it unnecessary to provide a fluid trap mechanism for preventing a cleaning solution or other treatment solution within the spiral passage of one rotating module from flowing into another rotating module. Therefore, when rotating modules of the present invention are connected to create a workpiece cleaning and drying device, the device dimensions and manufacturing cost can be reduced in comparison to the conventional rotating-drum-type cleaning device.

### Brief Description of the Drawing

FIG. 1 is a front perspective view showing the rotating module to which the present invention is applied, and a rear perspective view showing the rotating module in a see-through state;
FIG. 2 is a diagram showing the workpiece conveyance operation of the rotating module shown in FIG. 1;
FIG. 3 is a diagram showing a modified example of the rotating module;
FIG. 4 is a schematic front view showing an example of a multi-tank inline cleaning device that uses the rotating module of the present invention;
FIG. 5 is a schematic plan view of the cleaning device shown in FIG. 4;
FIG. 6 is a diagram showing the internal structure of the cleaning device shown in FIG. 4.

### Best Mode For Carrying Out the Invention

Embodiments of a rotating module and workpiece cleaning and drying device obtained by applying the present invention will be described hereinafter with reference to the drawings.

### (Rotating Module)

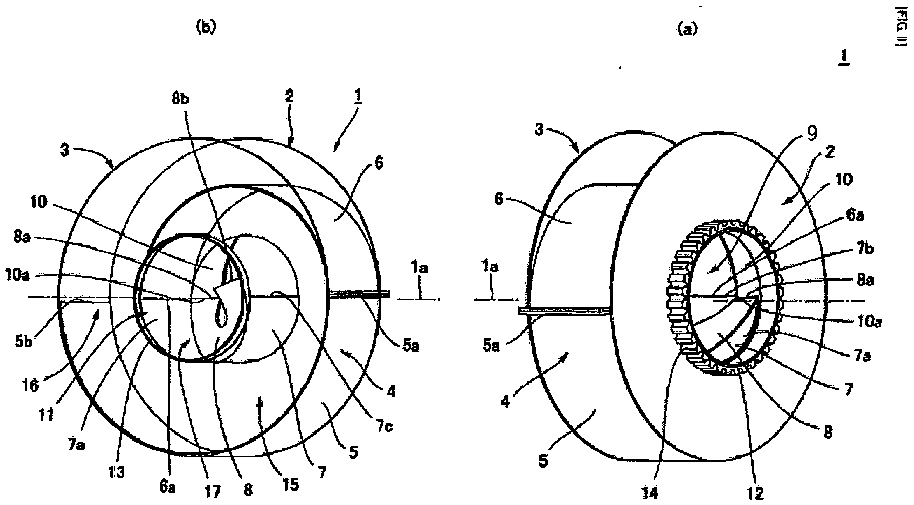

FIG. 1 is a diagram showing the rotating module for workpiece conveyance/processing that is obtained by applying the present invention, wherein FIG. 1(a) is an external perspective view from the front end, and FIG. 1(b) is a perspective view from the rear end. FIG. 1(b) shows a see-through state to enable understanding of the internal structure of the rotating module.

The rotating module 1 of the present example has a circular front end panel 2 and a circular rear end panel 3 arranged facing each other at a fixed interval at the front and rear in the direction of the central axis 1a of the module, and a partition panel 4 provided as a spiral between the panels.

The partition panel 4 is provided with a semicircular large-diameter arcuate panel portion 5 (large-diameter internal peripheral surface portion) attached along the external peripheral edges of the circular front and rear end panels 2, 3; a spiral curved surface panel portion 6 (spiral internal peripheral surface portion) that spans a 180-degree angle and is smoothly connected to one end 5a of the large-diameter arcuate panel portion 5; and a semicircular small-diameter arcuate panel portion 7 (small-diameter internal peripheral surface portion) that is smoothly connected to an end 6a of the spiral curved surface panel portion 6. The large-diameter arcuate panel portion 5 and the small-diameter arcuate panel portion 7 are arranged concentrically, and the spiral curved surface panel portion 6 that runs between these two panel portions has a curved surface that follows an involute curve, for example.

A helical feeding fin 8 centered around the central axis 1a is attached to an internal peripheral surface 7a of the small-diameter arcuate panel portion 7 so as to extend along this internal peripheral surface. This helical feeding fin 8 has a fixed height, stands perpendicular to the internal peripheral surface 7a, and is attached so as to extend from the angular portion of the axial front edge at an end 7b connected to an end 6a of the spiral curved surface panel portion 6, to the angular portion of the rear axial edge at the other end 7c. A circular intake port 9 having substantially the same internal diameter as the small-diameter arcuate panel portion 7 is formed in the front end panel 2, in which a front end 8a of the feeding fin 8 is positioned. A guide panel 10 is attached to the internal peripheral edge of the intake port 9, and the panel extends in the circumferential direction along this internal peripheral edge. One end 10a of this guide panel 10 is connected to the front end 8a of the feeding fin 8, and the width thereof gradually decreases towards the distal end. A circular discharge port 11 having the same diameter is also formed in the rear end panel 3 where a rear end 8b of the feeding fin 8 is positioned.

A connecting ring 12 having the same internal diameter as the circular intake port 9 protrudes in a coaxial state from the outside surface of the front end panel 2, and a connecting ring 13 having the same internal diameter as the circular discharge port 11 also protrudes in a coaxial state from the outside surface of the rear end panel 3 in the same manner. A driven gear 14 (rotation input member) for introducing rotational force is integrally formed with or mounted to the external periphery of the frontally disposed connecting ring 12 in the rotating module 1 of the present example.

In the rotating module 1 thus configured, the front and rear end panels 2, 3, as well as the partition panel 4 arranged in a spiral, form a partition in a spiral passage 15 that extends in the direction perpendicular to the central axis 1a. The external peripheral end of this spiral passage 15 is connected to the outside via a rectangular input port 16 formed at the end 5b of the large-diameter arcuate panel portion. The small-diameter arcuate panel portion 7 positioned towards the center of the partition panel 4 functions as an axial passage 17 for carrying a workpiece out in the axial direction towards the discharge port 11.

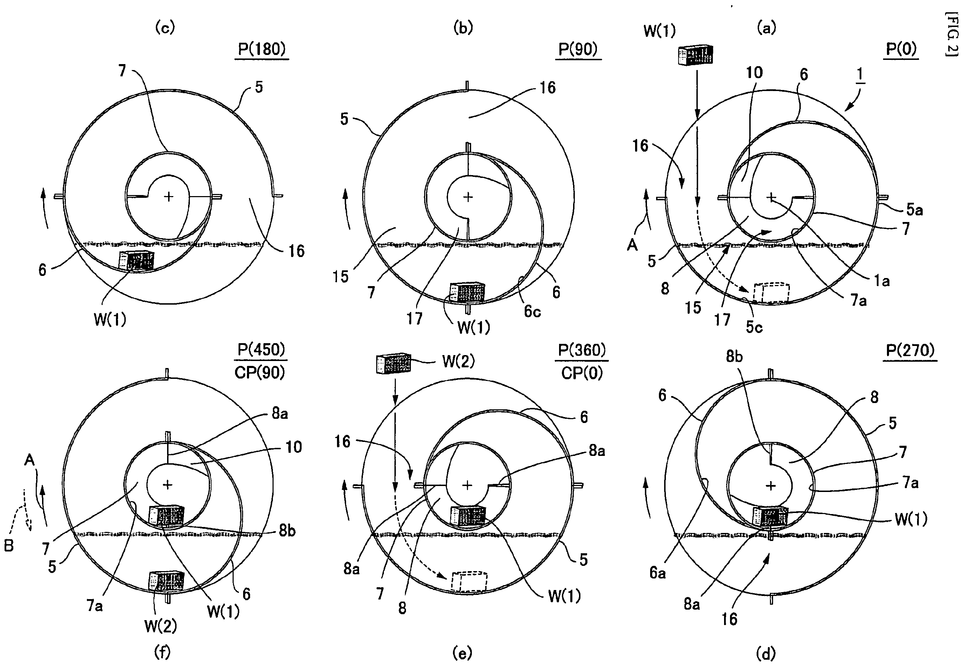

FIG. 2 is a diagram showing the workpiece conveyance operation of the rotating module 1 of the present example. The rotating module 1 is placed so that the central axis 1a is horizontal, and as shown in FIG. 2(a), the state in which the input port 16 points directly upward is designated as the origin position P(0) of the rotation direction. In this state, a workpiece W(1) is introduced from directly above the input port 16, whereupon the workpiece W(1) slides down the arcuate internal peripheral surface 5c of the large-diameter arcuate panel portion 5 and reaches the lowest position. When the rotating module 1 rotates in the direction of arrow A from this state, the workpiece W(1) slides under its own weight down the arcuate internal peripheral surface 5c in relative fashion, and is always retained in the lowest position.

FIG. 2(b) shows a state of 90-degree rotation to position P(90). When the rotating module 1 rotates further, the workpiece W(1) is retained in the lowest position on the spiral internal peripheral surface 6c of the spiral curved surface panel portion 6. Since the spiral internal peripheral surface 6c travels towards the center in conjunction with rotation, the workpiece W(1) is also gradually drawn up towards the center. FIG. 2(c) shows a state of 180-degree rotation to position P(180), and FIG. 2(d) shows a state of 270-degree rotation to position P(270). When a 270-degree rotation occurs, the workpiece W(1) is transferred to the internal peripheral surface 7a of the small-diameter arcuate panel portion 7 towards the center. A guide panel 10 is attached to the internal peripheral edge of the intake port 9 herein, and the workpiece W(1) traveling along the spiral internal peripheral surface 6c is prevented from dropping out from the intake port 9.

A feeding fin 8 that extends helically in the direction of the central axis 1a is attached to the circular internal peripheral surface 7a of the small-diameter arcuate panel portion 7. Accordingly, in conjunction with the rotation of the rotating module 1, the workpiece W(1) that has arrived at the circular internal peripheral surface 7a is carried out by the side surface of the feeding fin 8 to the rear in the axial direction 1a from the side of the front end 8a of the feeding fin 8. At position P(360) after a single rotation of the rotating module 1, the workpiece W(1) is positioned in the small-diameter arcuate panel portion 7 at the center in the axial direction, as shown in FIG. 2(e). When position P(450) is reached from this state after a further 90-degree rotation of the rotating module 1, the workpiece W(1) has been carried to the discharge port 11, as shown in FIG. 2(f). The workpiece W is then discharged to the outside by the rotation of the rotating module 1.

When a new workpiece W(2) is introduced in sequence from the input port 16 as shown in FIG. 2(e) at each single rotation of the rotating module 1, the workpiece passes in sequence through the spiral passage 15 and the axial passage 17 and exits from the discharge port 11 with each single rotation. For example, when two rotating modules 1 having this structure are coaxially connected in the axial direction and integrally rotated about the central axis 1a, a workpiece introduced into the rotating module 1 of the first stage passes through the spiral passage 15 and the axial passage 17 and exits from the discharge port 11, and then enters the axial passage 17 from the intake port 9 of the second-stage rotating module 1. The workpiece introduced into the axial passage 17 from the intake port 9 is carried in the axial direction 1a by the feeding fin 8, and is dropped to the position indicated by the imaginary line in FIG. 2A in the spiral passage 15. In the same manner as the workpiece introduced from the input port 16, the workpiece that has dropped in the spiral passage 15 is again carried in towards the center from the spiral passage 15 to enter the axial passage 17, and is carried out to the front-side discharge port 11 by the feeding fin 8 and discharged.

Accordingly, when a plurality of rotating modules 1 are connected in the axial direction and driven so as to rotate in the same direction, a workpiece introduced to the first-stage rotating module 1 is carried to the rotating module 1 of the next stage through the spiral passage 15 and axial passage 17 of each rotating module 1, and is discharged from the discharge port 11 of the final-stage rotating module 1. Configuring stages of rotating modules 1 as processing stations in order to perform a prescribed treatment on a workpiece while the workpiece is conveyed in the spiral passage 15 of each rotating module in this manner makes it possible to perform a series of processes in a predetermined sequence on a workpiece introduced into the first-stage rotating module 1, and to retrieve the workpiece after completion of processing from the discharge port 11 of the final-stage rotating module 1.

Rotation of the rotating module 1 in the reverse direction enables a workpiece introduced from the discharge port 11 to be discharged from the intake port 9. Specifically, as shown in FIG. 2(f), when a workpiece is introduced from the discharge port 11, and rotation occurs in the direction indicated by arrow B, the workpiece is transferred to the state shown in FIG. 2(a) in the reverse of the sequence described above; i.e., through the sequence of states shown in FIGS. 2(e), 2(d), 2(c), and 2(bB. The workpiece is in the state shown in FIG. 2(d) when a further rotation of 90 degrees is completed, and the workpiece drops out from the input port 16.

### (Modified Example of Rotating Module)

In a case in which a rotating module 1 is rotated in the same direction when the coil direction of the spiral passage 15 is reversed in the rotating module 1 shown in FIGS. 1 and 2, a workpiece introduced from the discharge port 11 can be carried from the axial passage 17 towards the center of the spiral passage 15 and discharged from the input port 16 on the external peripheral end through the spiral passage 15. In this case, the discharge port 11 is used instead of the input port for the workpiece, and the input port 16 is used instead of the discharge port for the workpiece.

A single spiral passage 15 is formed in the rotating module 1 shown in FIGS. 1 and 2. It is also possible to provide a plurality of spiral passages 15.

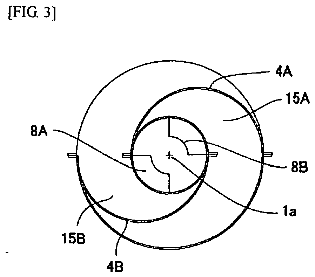

For example, as shown in FIG. 3, two partition panels 4A, 4B may be arranged in a spiral shape and offset from each other 180 degrees in the circumferential direction about the central axis 1a, and two spiral passages 15A, 15B may be formed. In this case, input ports may be placed in positions that are offset by 180 degrees and that correspond to the external peripheral ends of the spiral passages 15A and 15B. Two feeding fins 8A, 8B may also be attached in a helical shape and offset 180 degrees from each other in the internal peripheral surface of the small-diameter arcuate panel portion that defines the centrally disposed axial passage. It is also apparent that three or more spiral passages may be formed.

When a plurality of spiral passages are thus provided, it is possible for a machine on the workpiece input side to continuously perform conveyance and prescribed processing of a workpiece in accordance with the continuous delivery of workpieces, such as by a continuous high-speed working machine or the like.

The spiral passage 15 is defined above by an involute curve, but the spiral passage may also be defined by smoothly connecting arcuate curved surfaces. Alternatively, a spiral passage composed of a polygonal internal peripheral surface may be formed by linking together a plurality of flat surfaces at a prescribed angle.

Furthermore, a rotation input member (driven gear 14) was attached to the side of the intake port 9 in the rotating module 1 shown in FIGS. 1 and 2, but it is apparent that a rotation input member may be attached to the side of the discharge port 11, and that rotation input members may be attached on both sides. The rotation input member may also be omitted in some cases. The rotation input member may take various forms, including a mechanism whereby rotational force is transmitted from a motor via a gear train, a belt/pulley-type transmission mechanism, a mechanism whereby rotational force is transmitted from a hollow actuator composed of a hollow motor and a hollow reduction gear, or another mechanism.

In such cases as when a plurality of rotating modules 1 are connected and used, the intake port 9 in the first-stage rotating module 1 may be omitted. By omitting the discharge port 11 of the final-stage rotating module 1 and rotating the modules in the negative direction, a workpiece can also be discharged from the input port 16.

Various types of known mechanisms may be employed as the connecting mechanism for connecting rotating modules 1 in the axial direction.

### (Workpiece Cleaning and Drying Device)

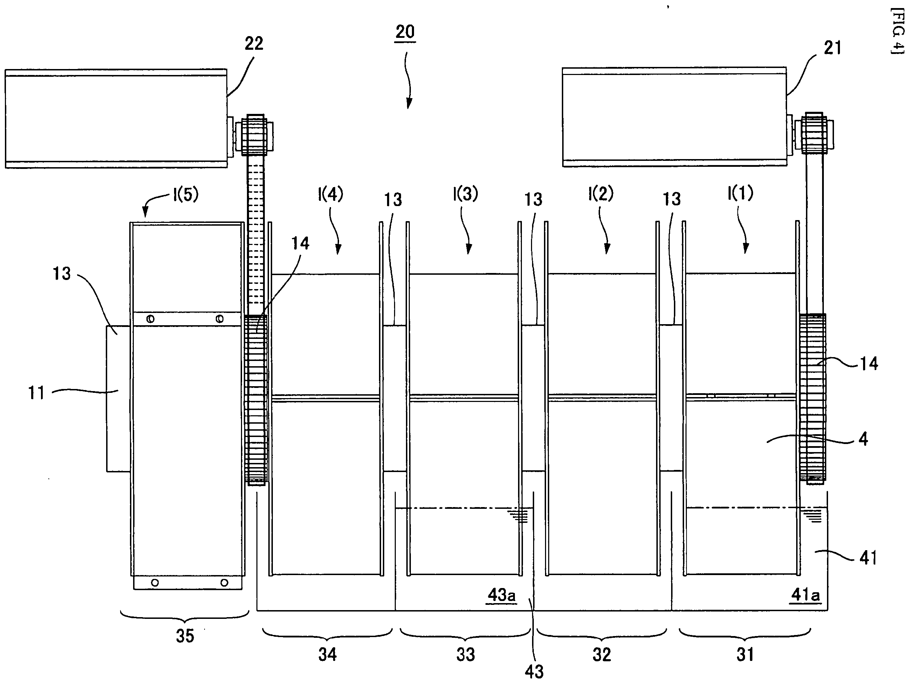

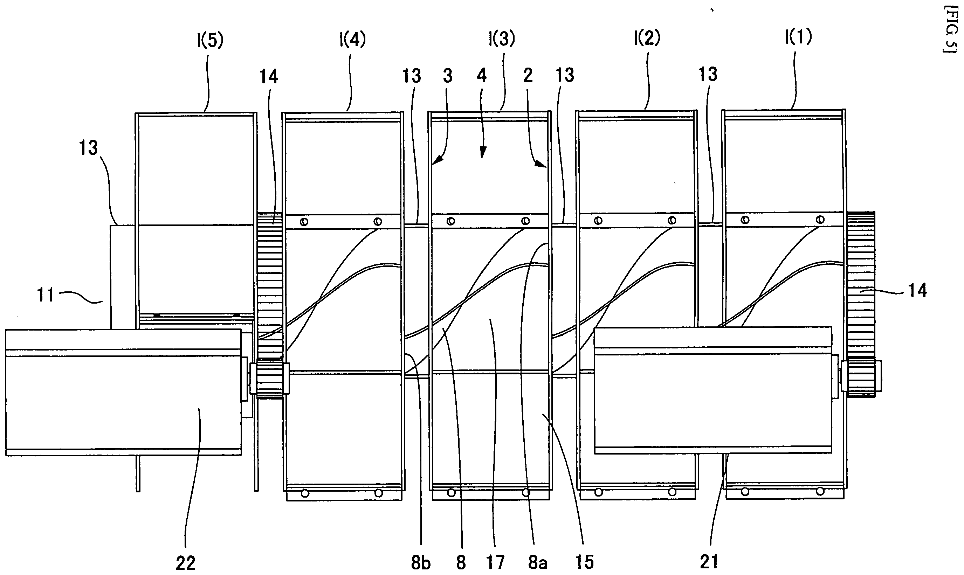

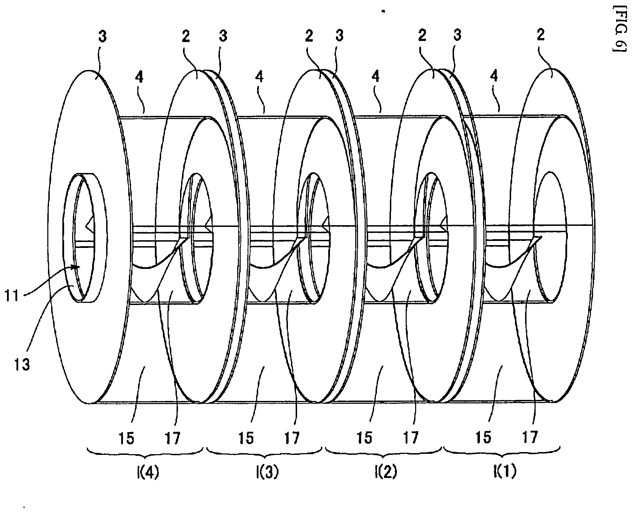

FIG. 4 is a schematic front view showing an example of a multi-tank inline cleaning device that uses the rotating module 1. FIG. 5 is a schematic plan view of the same, wherein a portion is omitted in order to facilitate understanding of the internal structure. FIG. 6 is a perspective view showing the internal structure of rotating modules from a first stage to a fourth stage.

The multi-tank inline cleaning device 20 of the present example is configured so that five rotating modules 1(1) to 1(5) are connected in tandem, rotating modules 1(1) through 1(4) of the first through fourth stages are integrally rotated by the same drive motor 21, and the fifth rotating module 1(5) of the final stage is independently driven by a separate drive motor 22. The rotating module 1(1) of the first stage functions as a cleaning station 31, the rotating module 1(2) of the second stage functions as a de-wetting station 32, the rotating module 1(3) of the third stage functions as a rinsing station 33, the rotating module 1(4) of the fourth stage functions as a de-wetting station 34, and the rotating module 1(5) of the final and fifth stage functions as a drying station 35. A workpiece is conveyed through processing stations 31 through 35, oil or debris adhering to the workpiece during machining is removed, and the workpiece is discharged in a dry state.

As is apparent from FIG. 5, the feeding fins 8 in the rotating modules are configured so that the feeding fin 8 of the rotating module on the first-stage side extends to the internal peripheral surface of a connecting ring 13 that connects the rotating modules, and the rear end 8b thereof reaches the internal peripheral edge on the rear-end side of the connecting ring 13.

The lower portion of the rotating module 1(1) of the cleaning station 31 is immersed in a cleaning solution 41a stored in a cleaning solution storage tank 41. A hydrogenperoxide-based cleaning solution, a solution in which an alkaline cleaning fluid is added to water, or another solution may be used as the cleaning solution at, for example, a temperature of 30 to 80°C, according to the state of contamination of the workpiece. The partition panel 4 of the rotating module 1(1) is formed from a punching metal, a mesh, or another porous sheet. The rotating module 1(1) is positioned so that the surface of the cleaning solution is lower than the axial passage.

Therefore, when a workpiece is introduced from the input port 16, and the rotating module 1(1) is rotated, and the workpiece retained in the spiral passage 15 in rotation through the cleaning solution is cleaned by the cleaning solution 41a. The workpiece is preferably shaken or rolled in order to perform efficient cleaning. This may be accomplished by forming small projections on the surface of the spiral passage 15, i.e., the internal peripheral surface of the partition panel 4, and using these projections to cause the workpiece to oscillate. The cleaning solution may also be stirred or circulated within the cleaning solution storage tank 41.

The workpiece cleaned inside the spiral passage 15 is drawn up towards the center in conjunction with the rotation of the rotating module 1(1), is carried into the axial passage 17 positioned higher than the surface of the cleaning solution 41a, and is carried through the axial passage 17 to the rotating module 1(2) of the subsequent de-wetting station 32. A partition panel 4 is also formed from a punching metal, a metal mesh, or another porous material in the rotating module 1(2) of the de-wetting station 32. Accordingly, the cleaning solution adhering to the workpiece is shaken off during travel between the spiral passage 15 and the axial passage 17 of the rotating module 1(2), and the cleaning solution is recovered by a cleaning solution recovery tank 42 disposed below.

In the rinsing station 33 of the subsequent stage, a rinsing solution storage tank 43 is provided for storing a rinsing solution 43a, and the lower portion of the rotating module 1(3) rotates while immersed in the rinsing solution 43a. The workpiece carried to this position is therefore conveyed while the cleaning solution is washed off by the rinsing solution. The partition panel of the rotating module 1(3) is also formed from a porous, liquid-permeable material.

The rinsing solution on the workpiece that has passed the rinsing station 33 is shaken off as the workpiece is carried in the rotating module 1(4) of the de-wetting station 34. The rinsing solution thus shaken off is recovered in a rinsing solution recovery tank on the lower side. The rotating module 1(4) has the same structure as the rotating module of the de-wetting station 32 described above.

The input port 16 of the rotating module 1(5) of the drying station 34 of the final stage is blocked by a lid composed of a metal mesh or other liquid-permeable material. This rotating module 1(5) is entirely covered by a cover (not shown). When a workpiece is carried into the rotating module 1(5), the module is rotated in the same direction as another rotating module by a drive mechanism 22, and the workpiece is dropped from the axial passage 17 to the spiral passage 15, after which the rotating module 1(4) is rotated at high speed in the negative direction. The workpiece is rotated at high speed while being pushed against the lid of the input port 16 of the rotating module 1(4), and the adhering liquid is completely removed by centrifugation. Then, when the rotating module 1(5) is again rotated in the positive direction, the dried workpiece is discharged from the discharge port 11.

The rotating module of the present invention can be used in a workpiece conveyance/processing device for cleaning, drying, and otherwise processing worked metal components, worked plastic components, and worked or finished products composed of ceramic and other inorganic substances. For example, the present invention can be used to create a plating device that is provided with a pre-cleaning (rough cleaning) station, a precision cleaning station, a plating station, and an after-cleaning station.

## Claims

1. A rotating module (1) that is configured for conveying and processing a workpiece (W(1), W(2)) and for transporting a workpiece (W(1), W(2)) that is introduced from an input port (16) along an internal conveyance path to be discharged from a discharge port (11) by rotational operation in a prescribed direction about a central axis (1a); said rotating module (1) comprising:
front and rear end panels (2, 3) disposed at both ends in a direction of said central axis (1a); and
a partition panel (4) attached in a spiral about said central axis (1a) and between the end panels (2, 3); wherein
a spiral passage (15) is formed into compartments by the front and rear end panels (2, 3) and said partition panel (4), and a passage surface of said spiral passage (15) is defined by an internal peripheral surface of said partition panel (4);
wherein said internal peripheral surface of said partition panel (4) comprises, in order from an external peripheral side:
an arcuate large-diameter internal peripheral surface portion (5) that is attached along the external peripheral edges of the front and rear end panels (2, 3) and spans a prescribed angle;
a spiral internal peripheral surface portion (6) that spans a 180-degree angle and is smoothly connected to one end (5a) in a circumferential direction of the arcuate large-diameter internal peripheral surface portion (5) providing the spiral passage (15) for discharging a workpiece (W(1), W(2)) from an external periphery towards a center along a spiral path that is centered about said central axis (1a), or from the center towards the external periphery; and
an arcuate small-diameter internal peripheral surface portion (7) that spans a prescribed angle and is connected to an end on a central side of the spiral internal peripheral surface portion (6) providing an axial passage (17) for discharging a workpiece (W(1), W(2)) in a direction of the central axis (1a) using a helical feeding fin (8) having a fixed height that is attached to an internal peripheral surface (7a) of the arcuate small-diameter internal peripheral surface portion (7) so that it stands perpendicularly to the internal peripheral surface (7a) and extends in a direction of said central axis (1a) and along the arcuate small-diameter internal peripheral surface portion (7) from an angular portion of the axial front edge at a first end (7b) of the arcuate small-diameter internal peripheral surface portion (7) connected to an end (6a) of the spiral curved surface panel portion (6), to an angular portion of the rear axial edge at a second end (7c) of the arcuate small-diameter internal peripheral surface portion (7);
wherein the large-diameter arcuate panel portion (5) and the small-diameter arcuate panel portion (7) are arranged concentrically, and the spiral curved surface panel portion (6) that runs between these two panel portions (5, 7) has a curved surface;
wherein said input port (16) or said discharge port (11) is formed in a position of said end panel (2, 3) on which a front end or rear end of said arcuate small-diameter internal peripheral surface portion (7) is positioned;
wherein a circular intake port (9) having substantially the same internal diameter as the small-diameter arcuate panel portion (7) is formed in the front end panel (2), in which a front end (8a) of the feeding fin (8) is positioned,
wherein a guide panel (10) is attached to the internal peripheral edge of the intake port (9), the guide panel (10) extending in the circumferential direction along this internal peripheral edge, wherein one end (10a) of this guide panel (10) is connected to the front end (8a) of the feeding fin (8), and the width thereof gradually decreases towards the distal end; and
wherein a circular discharge port (11) having the same diameter is also formed in the rear end panel (3) where a rear end (8b) of the feeding fin (8) is positioned.

2. The rotating module (1) according to claim 1, **characterized in that**
said spiral passage (15) includes at least first and second spiral passages (15A, 15B) formed so as to be offset in a peripheral direction at prescribed angular intervals about said central axis (1a); and
said input port (16) or said discharge port (11) is formed in a position that corresponds to an end on an external peripheral side of the first or second spiral passage (15A, 15B).

3. The rotating module (1) according to claim 2, **characterized in that**
said feeding fin (8) of said axial passage (17) includes first and second feeding fins (8A, 8B) that are offset at a prescribed angular interval about said central axis (1a) so that;
the workpiece (W(1), W(2)) is transferable between said first spiral passage (15) and said first feeding fin (8A); and
the workpiece (W(1), W(2)) is transferable between said second spiral passage (15) and said second feeding fin (8B).

4. The rotating module (1) according to claim 1, **characterized in that** a passage surface of said spiral passage (15) is defined by at least one curved surface (6) and/or a plurality of flat surfaces.

5. The rotating module (1) according to claim 1, **characterized in** comprising a rotation input member (14) for inputting rotational force about said central axis (1a).

6. The rotating module (1) according to claim 1, **characterized in** comprising an intake port (9) for carrying a workpiece (W(1), W(2)) into said axial passage (17).

7. The rotating module (1) according to claim 6, **characterized in that**
said discharge port (11) is positioned at one end of said axial passage (17), and said intake port (9) is positioned at the other end of the axial passage (17); and
the rotating module (1) further comprises a connecting unit for coaxially connecting said intake port to said discharge port (11) of another, identically structured, rotating module (1) and/or a connecting unit for coaxially connecting said discharge port (11) to said intake port of another, identically structured, rotating module (1).

8. The rotating module (1) according to claim 1, **characterized in that** a lid is attached to said intake port or said discharge port (11) that is connected to an end on an external peripheral side of said spiral passage (15).

9. The rotating module (1) according to claim 1, **characterized in that** a member for defining at least a passage surface of said spiral passage (15) is formed from a liquid-permeable material.

10. A workpiece conveyance/processing device comprising:
said rotating module (1) according to any one of claims 1 through 9; and
a rotational drive mechanism for rotating the rotating module (1) about said central axis (1a).

11. A workpiece cleaning device, **characterized in** comprising:
said rotating module (1) according to any one of claims 1 through 9;
a rotational drive mechanism for rotating the rotating module (1) about said central axis (1a); and
a treatment fluid storage tank (41) in which a cleaning solution or other treatment fluid is stored; wherein
said rotating module (1) is retained in a state in which a lower side portion of the rotating module (1) is immersed in said treatment fluid while said central axis (1a) is horizontally aligned; and
a member that defines a surface of said spiral passage (15) in the rotating module (1) is formed from a fluid-permeable material.

## Patentansprüche

1. Rotierendes Modul (1), das ausgebildet ist zum Befördern und Bearbeiten eines Werkstücks (W(1), W(2)) sowie zum Transportieren eines Werkstücks (W(1), W(2)), das von einer Eingangsöffnung (16) eingebracht wird, entlang eines internen Förderwegs zur Abgabe von einer Auslassöffnung (11) durch einen Rotationsvorgang in einer vorgegebenen Richtung um eine zentrale Achse (1a);
wobei das rotierende Modul (1) aufweist:
eine vordere und eine hintere Endplatte (2, 3), die in Richtung der zentralen Achse (1a) an den beiden Enden angeordnet sind; und
eine Trennplatte (4), die in einer Spirale um die zentrale Achse (1a) sowie zwischen den Endplatten (2, 3) angebracht ist;
wobei eine spiralförmige Passage (15) durch die vordere und die hintere Endplatte (2, 3) und die Trennplatte (4) in Form von Unterteilungen ausgebildet ist und eine Passagenfläche der spiralförmigen Passage (15) durch eine Innenumfangsfläche der Trennplatte (4) gebildet ist;
wobei die Innenumfangsfläche der Trennplatte (4) ausgehend von einer Außenumfangsseite der Reihe nach aufweist:
einen bogenförmigen Innenumfangsflächenbereich (5) mit großem Durchmesser, der entlang der äußeren Umfangsränder der vorderen und der hinteren Endplatte (2, 3) angebracht ist und einen vorbestimmten Winkel überspannt;
einen spiralförmigen Innenumfangsflächenbereich (6), der einen Winkel von 180 Grad überspannt und mit dem einen Ende (5a) in einer Umfangsrichtung des bogenförmigen Innenumfangsflächenbereichs (5) mit großem Durchmesser glatt verbunden ist und dadurch die spiralförmige Passage (15) bereitgestellt wird zum Abgeben eines, Werkstücks (W(1), W(2)) von einem Außenumfang in Richtung auf ein Zentrum entlang eines um die zentrale Achse (1a) zentrierten spiralförmigen Wegs oder von dem Zentrum in Richtung auf den Außenumfang; und
eine bogenförmigen Innenumfangsflächenbereich (7) mit kleinem Durchmesser, der einen vorgegebenen Winkel überspannt und mit einem Ende auf einer zentralen Seite von dem spiralförmigen Innenumfangsflächenbereich (6) verbunden ist und dadurch eine axiale Passage (17) gebildet wird zum Abgeben eines Werkstücks (W(1), W(2)) in Richtung der zentralen Achse (1a) unter Verwendung einer schraubenlinienförmigen Förderrippe (8) mit feststehender Höhe, die an einer Innenumfangsfläche (7a) des bogenförmigen Innenumfangsflächenbereichs (7) mit kleinem Durchmesser derart angebracht ist, dass sie rechtwinklig zu der Innenumfangsfläche (7a) absteht und sich in einer Richtung der zentralen Achse (1a) sowie entlang des bogenförmigen Innenumfangsflächenbereichs (7) mit kleinem Durchmesser von einem mit einem Ende (6a) des spiralförmigen Plattenbereichs (6) mit gekrümmter Oberfläche verbundenen, winkeligen Bereich des axialen vorderen Rands an einem ersten Ende (7b) des bogenförmigen Innenumfangsflächenbereichs (7) mit kleinem Durchmesser zu einem winkeligen Bereich des hinteren axialen Rands an einem zweiten Ende (7c) des bogenförmigen Innenumfangsflächenbereichs (7) mit kleinem Durchmesser erstreckt;
wobei der bogenförmige Plattenbereich (5) mit großem Durchmesser und der bogenförmige Plattenbereich (7) mit kleinem Durchmesser konzentrisch angeordnet sind und der spiralförmige Plattenbereich (6) mit gekrümmter Oberfläche, der sich zwischen diesen beiden Plattenbereichen (5, 7) erstreckt, eine gekrümmte Oberfläche aufweist;
wobei die Eingangsöffnung (16) oder die Auslassöffnung (11) an einer Position der Endplatte (2, 3) gebildet ist, an der ein vorderes Ende oder ein hinteres Ende des bogenförmigen Innenumfangsflächenbereichs (7) mit kleinem Durchmesser angeordnet ist;
wobei eine kreisförmige Einlassöffnung (9), die im Wesentlichen den gleichen Innendurchmesser wie der bogenförmige Plattenbereich (7) mit kleinem Durchmesser aufweist, in der vorderen Endplatte (2) gebildet ist, in der ein vorderes Ende (8a) der Förderrippe (8) angeordnet ist;
wobei eine Führungsplatte (10) an dem Innenumfangsrand der Einlassöffnung (9) angebracht ist, wobei sich die Führungsplatte (10) in der Umfangsrichtung entlang dieses Innenumfangsrands erstreckt, wobei das eine Ende (10a) dieser Führungsplatte (10) mit dem vorderen Ende (8a) der Förderrippe (8) verbunden ist und die Breite derselben in Richtung auf das distale Ende allmählich abnimmt; und
wobei eine kreisförmige Auslassöffnung (11) mit dem gleichen Durchmesser auch in der hinteren Endplatte (3) gebildet ist, an der an hinteres Ende (8b) der Förderrippe (8) angeordnet ist.

2. Rotierendes Modul (1) nach Anspruch 1,
**dadurch gekennzeichnet**, das die spiralförmige Passage (15) mindestens eine erste und eine zweite spiralförmige Passage (15A, 15B) beinhaltet, die derart ausgebildet sind, dass sie in einer Umfangsrichtung um vorgegebene Winkelintervalle um die zentrale Achse (1a) versetzt sind; und
wobei die Eingangsöffnung (16) oder die Auslassöffnung (11) in einer Position gebildet ist, die einem Ende auf einer Außenumfangsseite der ersten oder zweiten spiralförmigen Passage (15A, 15B) entspricht.

3. Rotierendes Modul (1) nach Anspruch 2,
**dadurch gekennzeichnet, dass** die Förderrippe (8) der axialen Passage (17) eine erste und eine zweite Förderrippe (8A, 8B) beinhaltet, die mit einem vorgegebenen Winkelintervall um die zentrale Achse (1a) versetzt sind, so dass
das Werkstück (W(1), W(2)) zwischen der ersten spiralförmigen Passage (15) und der ersten Förderrippe (8A) transferierbar ist; und
das Werkstück (W(1), W(2)) zwischen der zweiten spiralförmigen Passage (15) und der zweiten Förderrippe (8B) transferierbar ist.

4. Rotierendes Modul (1) nach Anspruch 1,
**dadurch gekennzeichnet, dass** eine Passagenfläche der spiralförmigen Passage (15) durch mindestens eine gekrümmte Fläche (6) und/oder eine Mehrzahl von ebenen Flächen gebildet ist.

5. Rotierendes Modul (1) nach Anspruch 1,
**dadurch gekennzeichnet, dass** es ein Rotationseinbringelement (14) zum Einbringen einer Rotationskraft um die zentrale Achse (1a) aufweist.

6. Rotierendes Modul (1) nach Anspruch 1,
**dadurch gekennzeichnet, dass** es eine Einlassöffnung (9) zum Befördern eines Werkstücks (W(1), W(2)) in die axialen Passage (17) aufweist.

7. Rotierendes Modul (1) nach Anspruch 6,
**dadurch gekennzeichnet, dass** die Auslassöffnung (11) an dem einen Ende der axialen Passage (17) angeordnet ist und die Einlassöffnung (9) an dem anderen Ende der axialen Passage (17) angeordnet ist; und
das rotierende Modul (1) ferner eine Verbindungseinheit zum koaxialen Verbinden der Einlassöffnung mit der Auslassöffnung (11) eines anderen, identisch strukturierten rotierenden Moduls (1) und/oder eine Verbindungseinheit zum koaxialen Verbinden der Auslassöffnung (11) mit der Einlassöffnung eines anderen, identisch strukturierten rotierenden Moduls (1) aufweist.

8. Rotierendes Modul (1) nach Anspruch 1,
**dadurch gekennzeichnet, dass** an der Einlassöffnung oder der Auslassöffnung (11) ein Deckel angebracht ist, der mit einem Ende auf einer Außenumfangsseite der spiralförmigen Passage (15) verbunden ist.

9. Rotierendes Modul (1) nach Anspruch 1,
**dadurch gekennzeichnet, dass** ein Element zum Bilden mindestens einer Passagenfläche der spiralförmigen Passage (15) aus einem flüssigkeitsdurchlässigen Material gebildet ist.

10. Werkstück-Beförderungs-/Bearbeitungsvorrichtung, aufweisend:
das rotierende Modul (1) nach einem der Ansprüche 1 bis 9; und
einen Rotationsantriebsmechanismus zum Drehen des rotierenden Moduls (1) um die zentrale Achse (1a).

11. Werkstück-Reinigungsvorrichtung,
**dadurch gekennzeichnet, dass** sie Folgendes aufweist:
das rotierende Modul (1) nach einem der Ansprüche 1 bis 9;
einen Rotationsantriebsmechanismus zum Drehen des rotierenden Moduls (1) um die zentrale Achse (1a); und
einen Behandlungsfluid-Vorratstank (41), in dem eine Reinigungslösung oder ein anderes Behandlungsfluid bevorratet ist;
wobei das rotierende Modul (1) in einem Zustand gehalten wird, in dem ein unterseitiger Bereich des rotierenden Moduls (1) in das Behandlungsfluid eingetaucht ist, während die zentrale Achse (1a) horizontal ausgerichtet ist;
und wobei ein Element, das eine Fläche der spiralförmigen Passage (15) in dem rotierenden Modul (1) bildet, aus einem fluiddurchlässigen Material gebildet ist.

## Revendications

1. Module rotatif (1) qui est configuré pour acheminer et pour traiter une pièce à usiner (W(1), W(2)) et pour transporter une pièce à usiner (W(1), W(2)) qui a été introduite à partir d'un orifice d'entrée (16) le long d'une voie d'acheminement interne pour être évacuée à partir d'un orifice de sortie (11) via une opération rotative dans une direction prescrite autour d'un axe central (1a), ledit module rotatif (1) comprenant :
des panneaux terminaux avant et arrière (2, 3) disposés aux deux extrémités dans une direction dudit axe central (1a) ; et
un panneau de séparation (4) fixé dans une spirale autour dudit axe central (1a) et entre les panneaux terminaux (2, 3) ; dans lequel
un passage en spirale (15) est transformé en compartiments par les panneaux terminaux avant et arrière (2, 3) et par ledit panneau de séparation (4), et une surface de passage dudit passage en spirale (15) est définie par une surface périphérique interne dudit panneau de séparation (4) ;
dans lequel ladite surface périphérique interne dudit panneau de séparation (4) comprend, dans l'ordre à partir d'un côté périphérique externe :
une portion de surface périphérique interne arquée à grand diamètre (5) qui est fixée le long des bords périphériques externes des panneaux terminaux avant et arrière (2, 3) et qui s'étend en formant un angle prescrit ;
une portion de surface périphérique interne en spirale (6) qui s'étend en formant un angle de 180° et qui est reliée sans à-coups à une extrémité (5a) dans une direction circonférentielle de la portion de surface périphérique interne arquée à grand diamètre (5) en procurant le passage en spirale (15) pour l'évacuation d'une pièce à usiner (W(1), W(2)) à partir d'une périphérie externe en direction d'un centre le long d'une voie en spirale qui est centrée autour dudit axe central (1a) ou à partir du centre en direction de la périphérie externe ; et
une portion de surface périphérique interne arquée à petit diamètre (7) qui s'étend en formant un angle prescrit et qui est reliée à une extrémité sur un côté central de la portion de surface périphérique interne en spirale (6) en procurant un passage axial (17) pour l'évacuation d'une pièce à usiner (W(1), W(2)) dans une direction de l'axe central (1a) en utilisant une ailette d'alimentation hélicoïdale (8) possédant une hauteur fixe, qui est fixée à une surface périphérique interne (7a) de la portion de surface périphérique interne arquée à petit diamètre (7), d'une manière telle qu'elle se dresse perpendiculairement à la surface périphérique interne (7a) et s'étend dans une direction dudit axe central (1a) et le long de la portion de surface périphérique interne arquée à petit diamètre (7) à partir d'une portion angulaire du bord avant axial à une première extrémité (7b) de la portion de surface périphérique interne arquée à petit diamètre (7) reliée à une extrémité (6a) de la portion de panneau de surface courbe en spirale (6), jusqu'à une portion angulaire du bord axial arrière à une deuxième extrémité (7c) de la portion de surface périphérique interne arquée à petit diamètre (7) ;
dans lequel la portion de panneau arquée à grand diamètre (5) et la portion de panneau arquée à petit diamètre (7) sont disposées en position concentrique, et la portion de panneau de surface courbe en spirale (6) qui s'étend entre ces deux portions de panneaux (5, 7) possède une surface courbe ;
dans lequel ledit orifice d'entrée (16) ou ledit orifice de sortie (11) est réalisé à un endroit dudit panneau terminal (2, 3) dans lequel est disposée une extrémité avant ou une extrémité arrière de ladite portion de surface périphérique interne arquée à petit diamètre (7) ;
dans lequel un orifice d'admission circulaire (9) possédant essentiellement le même diamètre interne que celui de la portion de panneau arquée à petit diamètre (7) est réalisé dans le panneau terminal avant (2), dans lequel est disposée une extrémité avant (8a) de l'ailette d'alimentation (8) ;
dans lequel un panneau de guidage (10) est fixé au bord périphérique interne de l'orifice d'admission (9), le panneau de guidage (10) s'étendant dans la direction circonférentielle le long de ce bord périphérique interne ; dans lequel une extrémité (10a) de ce panneau de guidage (10) est reliée à l'extrémité avant (8a) de l'ailette d'alimentation (8), et sa largeur diminue progressivement en direction de l'extrémité distale ; et
dans lequel un orifice circulaire de sortie (11) possédant le même diamètre est également réalisé dans le panneau terminal arrière (3), dans lequel est disposée une extrémité arrière (8b) de l'ailette d'alimentation (8).

2. Module rotatif (1) selon la revendication 1, **caractérisé en ce que** :
ledit passage en spirale (15) englobe au moins un premier et un deuxième passage en spirale (15A, 15B) réalisés d'une manière telle qu'ils sont décalés dans une direction périphérique à des intervalles angulaires prescrits autour dudit axe central (1a) ; et
ledit orifice d'entrée (16) ou ledit orifice de sortie (21) est réalisé à un endroit qui correspond à une extrémité d'un côté périphérique externe du premier ou du deuxième passage en spirale (15A, 15B).

3. Module rotatif (1) selon la revendication 2, **caractérisé en ce que** :
ladite ailette d'alimentation (8) dudit passage axial (17) englobe une première et une deuxième ailette d'alimentation (8A, 8B) qui sont décalées à un intervalle angulaire prescrit autour dudit axe central (1) d'une manière telle que :
la pièce à usiner (W(1), W(2)) peut faire l'objet d'un transfert entre ledit premier passage en spirale (15) et ladite première ailette d'alimentation (8A) ; et
la pièce à usiner (W(1), W(2)) peut faire l'objet d'un transfert entre ledit deuxième passage en spirale (15) et ladite deuxième ailette d'alimentation (8B).

4. Module rotatif (1) selon la revendication 1, **caractérisé en ce qu'**une surface de passage dudit passage en spirale (15) est définie par au moins une surface courbe (6) et/ou par un certain nombre de surfaces plates.

5. Module rotatif (1) selon la revendication 1, **caractérisé par le fait qu'**il comprend un élément d'entrée rotatif (14) pour exercer une force de rotation autour dudit axe central (1a).

6. Module rotatif (1) selon la revendication 1, **caractérisé par le fait qu'**il comprend un orifice d'admission (9) pour transporter une pièce à usiner (W(1), W(2)) jusque dans ledit passage axial (17).

7. Module rotatif (1) selon la revendication 6, **caractérisé en ce que** :
ledit orifice de sortie (11) est disposé à une extrémité dudit passage axial (17) et ledit orifice d'admission (9) est disposé à l'autre extrémité du passage axial (17) ; et
le module rotatif (1) comprend en outre une unité de liaison destinée à relier de manière coaxiale ledit orifice d'admission audit orifice de sortie (11) d'un autre module rotatif (1) de structure identique et/ou une unité de liaison destinée à relier de manière coaxiale ledit orifice de sortie (11) audit orifice d'admission d'un autre module rotatif (1) de structure identique.

8. Module rotatif (1) selon la revendication 1, **caractérisé en ce qu'**un couvercle est fixé audit orifice d'admission ou audit orifice de sortie (11), qui est relié à une extrémité sur un côté périphérique externe dudit passage en spirale (15).

9. Module rotatif (1) selon la revendication 1, **caractérisé en ce qu'**un élément destiné à définir au moins une surface de passage dudit passage en spirale (15) est formé à partir d'une matière perméable aux liquides.

10. Dispositif d'acheminement/traitement d'une pièce à usiner, comprenant :
ledit module rotatif (1) selon l'une quelconque des revendications 1 à 9 ; et
un mécanisme d'entraînement en rotation pour la mise en rotation du module rotatif (1) autour dudit axe central (1a).

11. Dispositif de nettoyage d'une pièce à usiner, **caractérisé en ce qu'**il comprend :
ledit module rotatif (1) selon l'une quelconque des revendications 1 à 9 ;
un mécanisme d'entraînement en rotation pour la mise en rotation du module rotatif (1) autour dudit axe central (1a) ; et
un réservoir de stockage de fluide de traitement (41) dans lequel est stocké une solution de nettoyage ou un autre fluide de traitement ; dans lequel
ledit module rotatif (1) est maintenu dans un état dans lequel une portion latérale inférieure du module rotatif (1) est plongée dans ledit fluide de traitement, tandis que ledit axe central (1a) est aligné à l'horizontale ; et
un élément qui définit une surface dudit passage en spirale (15) dans le module rotatif (1) est réalisé à partir d'une matière perméable aux fluides.
